# EUROPEAN PATENT SPECIFICATION

(11) **EP 2 651 240 B1**
(45) Date of publication and mention of the grant of the patent: **03.09.2014**
(21) Application number: 11791308.7
(22) Date of filing: 07.12.2011
(51) Int. Cl.: A23L 1/00, A23L 1/40

(54) **STOCK CUBE**
Brühwürfel
CUBE DE BOUILLON

(30) Priority: 17.12.2010 EP 10195630
(43) Date of publication of application: 23.10.2013
(73) Proprietor: Unilever N.V., 3013 AL Rotterdam (NL); Unilever PLC, London EC4Y 0DN (GB)
(72) Inventor: FARR, Robert Stanley, Sharnbrook, Bedfordshire MK44 1LQ (GB); KELLERMANN, Richard Friedrich, 74074 Heilbronn (DE)
(74) Representative: Reijns, Tiemen Geert Pieter
(86) International application number: PCT/EP2011/072101
(87) International publication number: WO 2012/080063

(56) References cited:
- EP-A1- 0 981 970
- WO-A1-2004/017762
- WO-A1-2004/049831
- WO-A1-2009/074442
- GB-A- 2 016 900

## Description

The present invention relates to a stock or seasoning cube. It further relates to a process to make the same.

### Background of the invention

Stock or seasoning cubes are used around the world to prepare a dish by dissolving them in an aqueous liquid. They are known as dry cubes or tablets, usually packaged in a cardboard box containing the cubes, which might be wrapped individually with a wrapper made from for example metal foil or plastic foil.

A conventional stock or seasoning cube may comprise crystalline material, like salt and monosodium glutamate and powdery material, like for example starch, vegetable powders and flavour powder. In addition, the cube may comprise a binder material, which is usually fat.

Two main and typical production processes to produce stock or seasoning cubes can be discriminated. A process commonly used is pressing. A powdery ingredient mass is mixed and compacted under relatively high pressure, to result in a pressed bouillon cube. The machinery is known for example from Bonals™, or Fette™. An alternative way of pressing is by using a roller compactor, wherein a powdery mass is pressed together between two rolls using a relatively high force which contain cavities wherein the ingredient powder is shaped. This type of bouillon cube has a texture that is relatively hard. The cubes are known in the field as "hard cubes" or "pressed cubes". Hard/pressed bouillon cubes allow for low fat levels, however, they have a texture that is relatively hard, which is often not desired by consumers. Hard/pressed cubes are in many cases hard to crumble between fingers. In other cases, hard cubes may have a powdery appearance after breaking, which might be perceived by consumers as not-fresh or too artificial. In relatively humid environments, hard cubes may get sticky or doughy by absorption of moisture during storage, which may reduce their possibilities to be crumbled even further, and which results in a negative appearance. When the absorbed moisture evaporates again, a cube results which is very hard reducing crumbability even further.

In an alternative production process a bouillon cube is made by extrusion. A mass of ingredients is provided which shows a pasty texture. This mass is shaped in the form of cubes or tablets. The pasty mass comprises a relatively high fat content to provide the pasty texture. A machine that is normally used to prepare this type of cubes is an extruder from Corazza™. Products like this are known in the field as "pasty cubes". The pasty cube or tablet shows a relatively soft texture, which can be crumbled. However, after crumbling the consumer may be left with fatty fingers and residues of the stock cube sticking to his or her fingers, and the consumer may want to wash his or her hands after using the cubes. Moreover, a fatty appearance of the cube might be conceived as unappealing. Finally, a relatively high fat content might not be desired because of a desired calories intake.

Examples of low fat bouillon tablets are known in the art. For example, WO2007/085609 describes a "hard bouillon tablet" which is made by pressing, and contains a mixture of oil and fat from 0.5% of the recipe to 15% of the recipe, as well as from 1 to 5% of water, and from 0.5 to 8% of cereal or vegetable fibres. The bouillon blocks are described here as hard.

WO2003/003858 describes bouillon blocks made with low fat levels as well as 1 to 20% of oil. The tablets are made by a pressing process and are described as hard.

WO2003/000077 describes a method for making a soft bouillon tablet. The bouillon tablet contains fine particles, and the pasty properties result from the presence of a substantial amount of oil.

WO 2004/017762 relates to an edible savoury particle slowly releasing a flavouring ingredient. The particle comprises sugars and/or polyols, salt and/or MSG, and a flavouring ingredient and has a volume of at least 0.5 ml. The particle is in the glassy state.

The cubes as known in the art show some drawbacks. A dichotomy is recognised that on the one hand a texture is appreciated, which allows the consumer to crumble the cube. The texture should not become hard after open storage of the cube, at least not after a relatively short time. The cube should however be sufficiently stable against attrition, to limit damage during packaging, transport and storage. On the other hand, a low fat level is desired. Therefore there is still a need for a bouillon tablet with a texture which is different from the conventional pasty cubes or the conventional pressed cubes, which is low in overall lipid level (fat + oil), shows a rather soft, plastic texture though resistance against attrition and shows robustness against drying-out after opening of the packaging of the cube, at least within a relatively short time of open storage.

### Summary of the invention

Surprisingly, this problem was solved by a stock or seasoning cube according to present claim 1, comprising:
- from 2 wt% to 15 wt% of water,
- NaCl in amount to provide at least a saturated solution, based on the water content,
- Monosodium glutamate in an amount to provide at least a saturated solution, based on the water content,
- Monosaccharide sugars in an amount of at least 25 wt%, based on the weight of the total water content.

The invention further relates to a Process to produce the stock or seasoning cube according to the invention, comprising the steps of:
a) Preparing a mixture comprising:
   - From 2 wt% to 12 wt% of added water,
   - NaCl in amount to provide at least a saturated solution, based on the amount of added water,
   - Monosodium glutamate in an amount to provide at least a saturated solution, based on the amount of added water,
   - Monosaccharide sugars in an amount of at least 40 wt%, based on the weight of the added water content.
b) Shaping the mixture resulting from step a),
to obtain a stock or seasoning cube.
The invention further relates to a process to prepare a dish, comprising the step of dissolving at least part of the stock or seasoning cube according to the invention in an aqueous solution or combining it, at least partly, with a dish.

### Detailed description of the invention

### Definitions

The present invention relates to a stock or seasoning cube. In the context of the present invention, a stock or seasoning cube is not limited to a cube shape, but rather indicates a specific type of food product. It may have any shape stable shape that is suitable to produce the product. Preferably, the product of the present invention is in the form of a cube or a rectangular prism.

A stock or seasoning cube is preferably understood as a concentrate product to prepare a bouillon upon dilution in water. It may preferably relate to a concentrate to prepare a bouillon, a soup, a sauce or a gravy.

The texture of the present invention is relatively soft. It is an advantage of the present invention that the soft texture is maintained for a considerable time after unwrapping it from its packaging.

The texture of the product of the present invention is not hard. It does not have a glassy state. In a product in the glassy state, the carbohydrates such as sugars and starch have been heated above their glass transition temperature, which creates a glassy state after cooling down. A glassy state is not desired, as this is not possible to crumble by hand. The texture of the product of the invention has a hardness lower than 50 N, preferably lower than 40 N, even more preferably lower than 30 N, most preferably lower than 20 N. The hardness is preferably higher than 1 N, preferably higher than 2 N most preferably higher than 5 N.

Hardness can be preferably be measured with an texture analyser (for example a TA.XT.plus Texture Analyser, from Stable Micro Systems. The hardness of a stock cube or stock cube recipe is determined by the following two-step process:
a) A tablet is made by placing 4 grams of the recipe in a metal mold of square cross section 14 mm by 14 mm. This sample is compressed in the mold under a force of 125 N to form a cuboidal tablet.
b) The hardness is measured by placing the resulting tablet with one face on a flat horizontal metal surface. A compression force is applied by lowering a flat horizontal metal platen onto the tablet, which moves at 0.5mm/s, for a total distance of 5mm after it first contacts the tablet, and the applied force is continuously recorded.

The hardness is the maximum compressive force exerted on the tablet during stage (b) of this procedure. The hardness is measured three times, so that an average and standard deviation can be calculated.

### Salt

The product of the present invention comprises NaCl in amount to provide at least a saturated solution, based on the water content. The amount of NaCl may also be more than this amount. Preferably, the NaCl is present in a ratio to water of at least 3:7, and in an amount of less than 90 wt% based on the weight of the stock or seasoning cube. NaCl is preferably present in an amount of from 1 wt% to 70wt% , preferably of from 10 wt% to 60 wt%, more preferably of from 20 wt% to 50 wt%, most preferably of from 30 wt% to 50 wt%, based on the weight of the cube.

### MSG

In addition to NaCl, the cube according to the present invention comprises monosodium glutamate (MSG). MSG is a crystalline ingredient. It is present in an amount to provide at least a saturated solution, based on the water content. The amount of MSG in the product may be higher. Preferably, the amount of MSG is such that the mass ratio of MSG to added water is at least 5:5. Preferably the mass ratio is at least 3:2, more preferably at least 2:1. The ratio is preferably lower than 20:1, more preferably lower than 15:1 and most preferably lower than 10:1. Preferably the amount of MSG is higher than 2 wt%, more preferably higher than 3 wt% and most preferably higher than 4 wt%, and preferably lower than 50 wt%, more preferably lower than 40 wt%, and most preferably lower than 30 wt%.

### KCl

In addition to NaCl and MSG, the composition may preferably also comprise KCl. The ratio of KCl to water is preferably between 0:10 and 8:2; preferably between 1:9 and 8:2; most preferably between 2:8 and 7:3. Preferably, KCl is present in an amount higher than 0 wt%, preferably higher than 0.2 wt%, more preferably higher than 0.5 wt%. The amount is preferably lower than 60 wt%, preferably lower than 20 wt% and preferably lower than 10 wt%. It can be preferably present in an amount of from 0 to 60 wt%, more preferably of from 0.2 to 20 wt%, even more preferably of from 0.5 to 10 wt%, most preferably of from 1 to 5 wt%. The advantage of addition of KCl is that the Aw of the product is lowered, which contributes to the ambient stable character of the product. KCl might be preferred in case a lower sodium content is desired.

### Monosaccharides

The product according to the present invention comprises monosaccharide sugars. Surprisingly, it was found that the use of monosaccharides results in the desired different texture of the stock cube, which is neither hard, nor pasty, like conventional cubes. The specific resulting texture renders the presence of high fat contents, as conventionally used in soft stock cubes, redundant. According to the invention, the soft, plastic texture was remained during open storage. Monosaccharide sugars are present in an amount of at least 25 wt%, based on the weight of the water content. In the process, monosaccharide sugars are present in an amount of at least 40 wt%, based on the weight of the added water content. So, for example, a recipe containing 10% w/w added water should contain at least 4% w/w monosaccharides. Preferably, monosaccahrides are present in an amount of at least 50 wt%, more preferably at last 60 wt%, based on added water. The amount is calculated as (amount of monosaccharide) /(amount of water) x100%. The monosaccharide sugars are preferably present in an amount that the ratio of monosaccharide sugars to water is at least 3:7. Preferably at least 5:5. Most preferably at least 6:4. Preferably the ratio of monosaccharides to water is lower than 10:1, more preferably lower than 5:1, most preferably lower than 4:1. Preferably, monosaccharides are present in an amount higher than 0.8 wt%, more preferably higher than 2 wt%, most preferably, higher than 3 wt%. Their amount is preferably lower than 50 wt%, more preferably lower than 30 wt% most preferably lower than 15 wt%, based on the weight of the cube.

The amount of monosaccharide sugars is preferably at least 25 wt%, more preferably at least 30 wt% most preferably at least 40 wt%, based on the weight of the total water content. Preferably, monosaccharides are present in an amount of from 25 wt% to 200 wt%, more preferably of from 30 wt% to 150 wt%, based on the weight of the total water.

Preferably, the monosaccharide sugars in the context of the present invention are monosaccharides selected from the group consisting of fructose, glucose, galactose, tagatose, ribulose, mannose, arabinose, and mixtures thereof. More preferably, the monosaccharide sugars are selected from the group consisting of glucose, fructose, galactose, tagatose and mixtures thereof. Most preferably, the monosaccharides are selected from the group consisting of glucose, fructose and mixtures thereof. Most preferably the monosaccharide sugar is fructose. The texture of the cubes according to the invention as obtained by the use of monosaccharide sugars remains stable after storage with opened packaging for a relatively long time and allows the cube to be crumbled.

In the context of the present invention, a sugar alcohol, such as for example xylitol, sorbitol, glycerol, erythritol, are not considered as being monosaccharides.

### Balance

The balance of the recipe comprises fillers, including (but not limited to) starch, maltodextrin, dried vegetables or herbs, meat, meat extract, protein, other sugars, flavours, flavour enhancers, such as IMP, GMP, or flow aids such as silicon dioxide. Starch might preferably be present in an amount of from 1 to 50 wt%, more preferably in an amount of from 2 to 40 wt%. Even more preferably starch may be present in an amount of from 5 to 20 wt%, based on the weight of the cube. The cube preferably comprises from 0.2 to 20 wt%, more preferably from 0.5 to 10, even more preferably of from 1 to 5 wt% of dried vegetables and/or herbs or pieces thereof, based on the weight of the cube. Preferably, the cube comprises from 2 to 25 wt%, more preferably of from 5 to 10 wt% of yeast extract, beef extract, hydrolysed vegetable protein, and mixtures thereof, based on the weight of the cube.

Preferably the amount of disaccharides, e.g. saccharose, is lower than 25 wt%, more preferably lower than 20 wt%, more preferably lower than 15 wt%, even more preferably, lower than 10 wt%, or even lower than 5 wt%. Saccharose tends to absorb water. Diluted saccharose has a high tendency to crystallise and may change the preferred soft texture to a hard texture. For reasons of taste, disaccharides could for example be present in an amount of from 1 to 25 wt%, from 5 to 20 wt%, from 5 to 15 or from 5 to 12 wt%, based on the weight of the resulting stock or seasoning cube. Disaccharides may preferably be saccharose.

### Lipids

The present invention preferably has a low amount of lipids. Lipids is intended to mean fat and oil. The amount of lipids is lower than 15 wt%, more preferably lower than 10 wt%, even more preferably lower than 5 wt%, even more preferably lower than 2 wt%, even more preferably the product according to the present invention is substantially free from lipid. Preferably, the amount of lipids is between 0 and 15 wt%, more preferably between 1 and 10 wt%, most preferably of between 3 and 7 wt%. A small amount of lipids might be desired in some applications, preferably a small amount of oil. Preferably, the amount of lipid which is not crystallized at 20°C is more than 50 wt%, preferably more than 80 wt%, even more preferably more than 90 wt%, even more preferably more than 95 wt%, based on the weight of the total lipid content of the cube. Most preferably, substantially all of the lipid content of the cube is fat which is not crystallized at 20°C. Preferably, the amount of fat which is crystallized at 20°C is lower than 50 wt%, preferably lower than 20 wt%, even more preferably lower than 10 wt%, even more preferably lower than 5 wt%, based on the weight of the total lipid content of the cube. Most preferably, the cube is substantially free from fat which is crystallized at 20°C.

### Water

The stock or seasoning cube according to the invention comprises water in a total amount of from 2 to 15 wt%. This amount provides optimal binding in combination with the other ingredients and optimal texture. The cube is soft, allowing it to be crumbled by fingers, though sufficiently resistant against attrition during packaging, transport and storage. Higher amounts of water might result in a product that becomes too weak or too sticky, or liquid-like. In addition, a higher water content might deteriorate flavor compounds. Preferably, the stock or seasoning cube of the invention comprises from 2 wt% to 12 wt%, more preferably from 3 wt% to 9 wt% of total water. Total water includes both added water and water which might be available in some ingredients. When preparing the cube, water is added in an amount of from 2 to 12 wt%. Preferably, water might be added in an amount of from 2 wt% to 10 wt%, more preferably from 2 to 8 wt%, or more preferably of from 3 wt% to 6 wt%.

The water content can be measured by using a "Sartorius MA150 Moisture Analyser" from the company "Data Weighing Systems" (DWS), using program 1 of the instrument. A small sample is spread over the weighing tray, and the instrument heats this sample to 105 Celsius, while continuously weighing it. The moisture content is determined through the mass loss, when this reaches a stable value.

### Aw

The stock or seasoning cube according to the invention is preferably an ambient stable product. Ambient stable is intended to mean that it can be stored outside of the fridge without growth of microorganisms. Preferably, the present invention relates to a stock or seasoning cube wherein the water activity is lower than 0.6, preferably lower than 0.55, measured at 20 °C. It may be preferred that the water activity is between 0.2 and 0.6, preferably of between 0.25 and 0.55. To guarantee a Aw sufficient for ambient stability, in addition to the required ingredients it may be preferred that other humectants may be present, such as sodium acetate, potassium acetate, sugar alcohols, or lactic acid, which serve to lower the water activity of the tablets. Therefore, preferably, the invention relates to a stock cube which further comprises one of the group of humectants consisting of sodium acetate, potassium acetate, sugar alcohols, lactic acid and mixtures thereof. These humectants may each be present in an amount of from 1 wt%. to 10 wt%., preferably in an amount of from 2 wt% to 5 wt%. Mixtures of these humectants may be present in an amount of from 1 wt%. to 10 wt%., preferably in an amount of from 2 wt% to 5 wt%. Preferred sugar alcohols in the context of the present invention are sugar alcohols selected from the group consisting of glycerol, sorbitol, mannitol, isomalt, maltitol and mixtures thereof.

### Size

The size of the product preferably is a size which allows unit dosing of the product. Preferably the product has a size of between 0.5 and 6 cm, more preferably of between 1 and 5 cm, most preferably of between 1.5 and 4 cm, as measured in the longest possible diameter.

The product preferably has a weight of between 1 and 50 grams, more preferably of between 2 and 30 grams, most preferably of between 3 and 20 grams.

The density of the cube depends on the ingredients that are used. Preferably, the density is lower than 1.6 g/cm³, more preferably, lower than 1.55 g/cm³. Preferably, the density is more than 1.2 g/cm³, preferably more than 1.3 g/cm³. The density can be of from 1.3 to 1.6 g/cm³, preferably of from 1.4 to 1.55 g/cm³.

### Process

The product further relates to a process to produce the product according to the invention. The process comprises the steps of a) preparing a mixture of all ingredients. In step b) the mixture is shaped. The mixture can suitably be prepared in a standard mixing device such as for example a Hobart mixing apparatus. It is preferred if first a mixture is prepared comprising at least part of the monosaccharides and at least part of the water. This mixture is then combined with the rest of the ingredients, or mixed in at an intermediate stage, during a sequential addition of the other ingredients. The rest of the ingredients comprise the NaCl, monosodium glutamate. Therefore, preferably, the invention relates to a process according to the invention, wherein step a) comprises the consecutive steps of:
i. preparing a mixture comprising at least part of the water and at least part of the monosaccharides,
ii. combining said mixture with the NaCl and monosodium glutamate.

After the preparation of the mixture comprising all required ingredients, the mixture is shaped in step b). Shaping is preferably done into the shape of a cube or a rectangular prism.

Shaping can be done by roller formation. Roller formation is a technique well known to the person skilled in the art, and has been described for example in EP0950358. It should be discriminated from roller compaction, which is in fact a type of high pressure pressing. During roller compaction a powdery mass is compressed between rollers which comprise cavities at their surface. Shaping is more preferably done by pressing or extrusion. A process comprising pressing might not be preferred, especially when it uses relatively high pressing forces, as it might easily result in a force which is too high and might not result in the desired texture or might be not compatible with the ingredients mixture. For example the mixture can be too sticky for conventional pressing machines. During roller formation a slab of the material is produced by guiding an ingredient mixture between a set of at least two rolls. The resulting slab of material is subsequently divided into individual stock cubes, preferably by cutting. Cutting is preferably done by ultrasonic cutting, which proved optimal for the surface texture of the present invention.

Hence, in a preferred aspect the present invention relates to process according to the invention, wherein the shaping step comprises roller formation. A process comprising roller formation in the shaping step resulted in the optimal texture of the stock cube of the present invention. The formation of the product of the present invention is however not limited to the process of roller formation. A product according to the invention might be produced by extrusion technology, e.g. by using a machine of Corazza. Also compression technology (pressing) might be preferred. As mentioned, when using compression technology, a relatively low pressure is preferred, compared to the relatively high conventional compression forces as generally used to produce pressed bouillon cubes. Preferably, the force applied to obtain the product of the present invention is lower than 15 bar, preferably lower than 10 bar, more preferably lower than 8 bar. It is preferably higher than 0.5 bar, more preferably higher than 1 bar, more preferably higher than 2 bar.

After shaping of the product, the product is preferably packaged, and hence preferably, the process comprises a packaging step. Preferably, the stock cube is packaged individually, in a wrapper made of plastic foil or metal, like aluminium, foil, or laminated packaging of plastic, paper, wax, et al and combinations of these. The properties of the cube of the present invention, however, allow packaging without individual wrappers, as they are more stable to drying out and as the problem of fat staining from the cube into the cardboard packaging is reduced, if not absent at all. Preferably the stock cubes of the present invention are packaged in a box, preferably a cardboard box comprising preferably from 2 to 150 cubes, more preferably of from 4 to 40 cubes, even more preferably of from 12 to 20 cubes.

The present invention further relates to stock or seasoning cubes obtainable by the process of the present invention.

### Use

The product of the present invention is a concentrated food product. It is usually not consumed as such, but is intended to be diluted first in an aqueous solution. The product is preferably diluted in water or in a liquid dish. Preferably, the present invention relates to a process to prepare a dish, comprising the step of dissolving at least part of the stock or seasoning cube according to the invention in an aqueous solution or combining it at least partly with a dish. The temperature of the aqueous solution is preferably of between 50°C and 100°C, more preferably of between 60°C and 95°C, most preferably of between 70°C and 90°C. As the stock or seasoning cube of the present invention has a relatively soft texture and allows for a relatively low fat content, the dissolution behavior is good.

The product may preferably be added to the aqueous solution in crumbled form, as this may reduce the dissolution time even further. Preferably, the stock or seasoning cube of the present invention with a size of between 3 and 20g is dissolved in boiling water in a time of less than 3 minutes, preferably in a time less than 2 minutes.

### Example

The invention will now be exemplified by the following nonlimiting examples.

Stock cubes were produced according to the following recipes

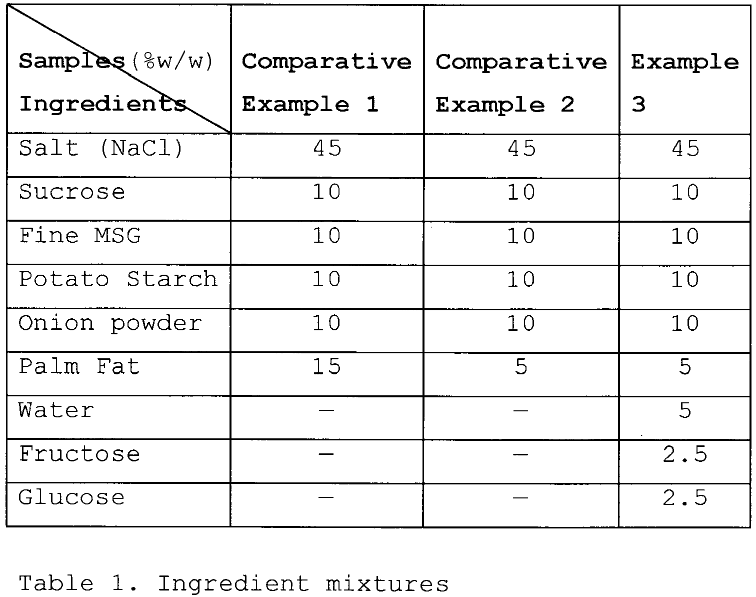

### Preparation method:

i. The solid palm fat was melted.
ii. Fructose and glucose were mixed in the cold water and then heated up at 60°C to help dissolve these sugars.
iii. The remaining dry ingredients (salt, sucrose, fine MSG, starch) were mixed.
iv. These mixed ingredients were added first to fructose-glucose solution and mixed rigorously by hand.
v. Subsequently, this mixture was added to molten palm fat and mixed again rigorously by hand.
vi. Samples were left in a sealed container to cool down to ambient temperature.
vii. Four gram samples of the mix were then pressed in a metal mould of 14mm by 14mm square cross section, under a force of 125 N, 6.3 bar.

### Results:

Comparative example 1 formed a firm, plastic, pasty cube, comparable to conventional pasty cubes. When compressed between flat platens the cube showed a hardness of 19.6±0.2N, which was achieved when the platens had compressed the cube to approximately 0.5mm less than its original height. Comparative example 2 with a reduced fat content had a hardness of 4.3±0.6N, and was very dry, brittle and fragile.

Example 3 produced firm, plastic cubes, and 17.8±0.5N respectively. Example 3 produced a broad force-versus displacement peak under compression in the hardness test, indicating a very plastic material, and giving a hardness of 17.8±0.5N.

The water activities of these samples were:

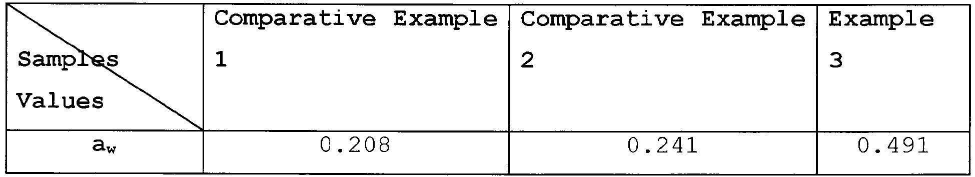

### Qualitative texture assessment:

A group of three people assessed the qualitative texture of cubes made from the recipe of comparative example 2, which contained 5% fat, and no added water. The cubes prepared from this recipe using the method described for the hardness measurement, were described as "very fragile" and "dry". When the same recipe was made by a high pressure pressing operation, the cubes were described as "quite hard" "brittle" and "dry". When cubes made from the recipe of example 3 by the method used for the hardness measurements, were assessed by the same people, these cubes were described as "soft" "plastic" "moist" "a bit sticky" and "not dry", and "able to be crumbled"

### Conclusions:

The results show that a recipe with no added water, and a high level of fat (Comparative Example 1) produces a cube with a firm, but pasty, texture. Removing most of the fat (Comparative Example 2) leads to a very fragile and brittle cube. Production of cubes using this recipe under a high compression force, result in hard and brittle cubes, rather than a soft, plastic cube, as is preferred by consumers.

Including monosaccharide sugars in a suitable ratio and added water (Example 3) led to a cube with excellent, plastic texture. The cube could be easily crumbled between fingers. The cubes maintain their ability to be crumbled easily between fingers, and do not show significant dry out effects like e.g. surface hardening, even after storage with open packaging.

The following recipes according to the invention were produced, using the procedure described in example 1 to 3.

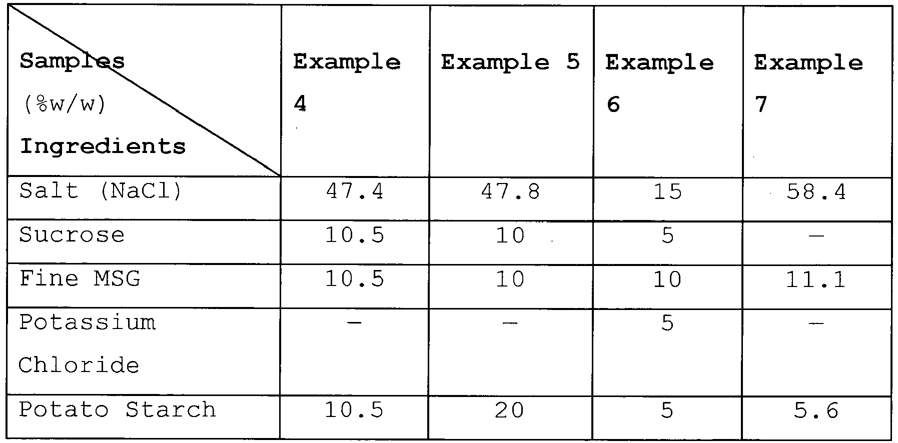

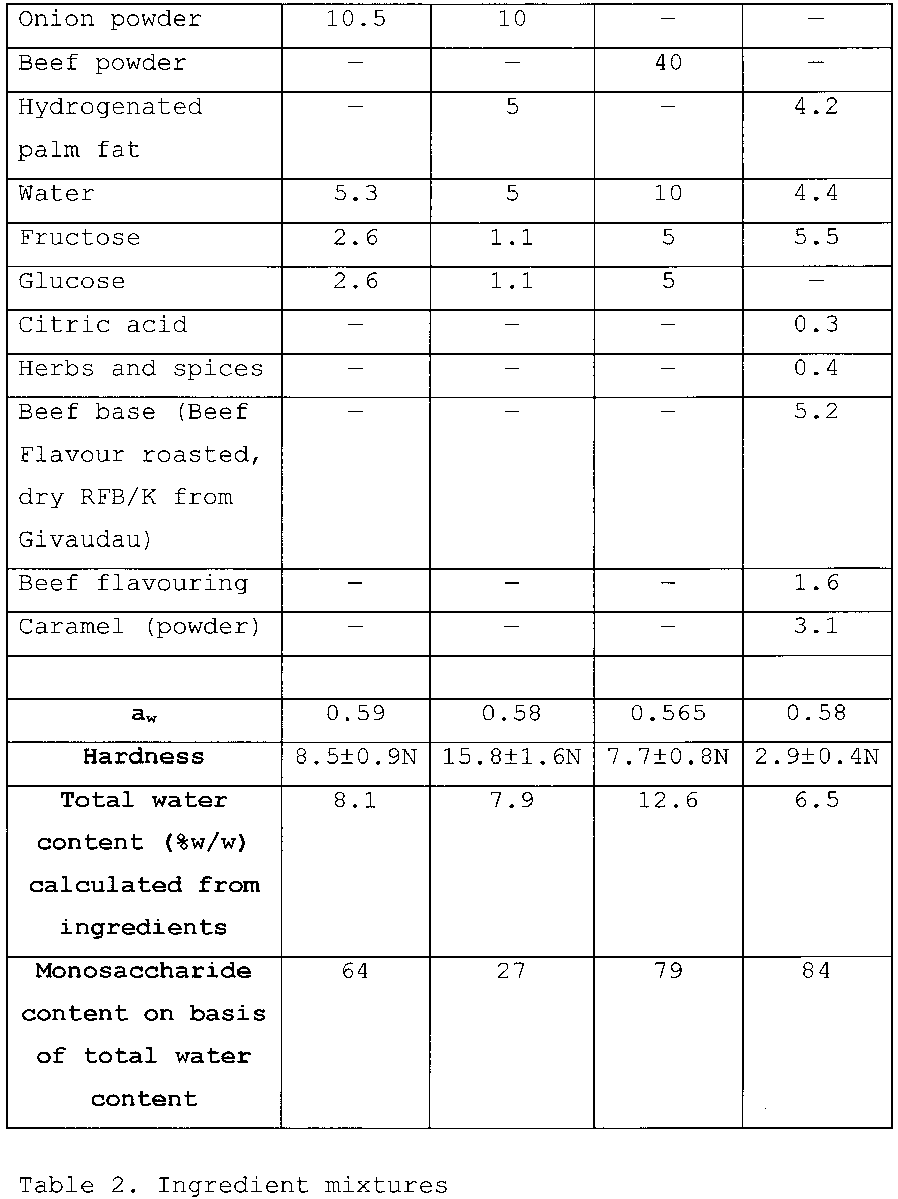

Example 4 shows a cube according to the invention with no added fat.

Example 5 shows that a cube according to the invention comprising a relatively low ratio of monosaccharides to water. Example 6 shows a cube according to the invention, using a relatively high level of water.

Example 7 shows a beef recipe according to the invention without sucrose.

The cubes produced according to Examples 5 to 8 showed a texture which was stable and not too soft. It was not hard or brittle. It could be easily crumbled between fingers. It does not significantly dry out after open storage.

The water content was measured by using a "Sartorius MA150 Moisture Analyser" from the company "Data Weighing Systems" (DWS), using program 1 of the instrument. A small sample is spread over the weighing tray, and the instrument heats this sample to 105 Celsius, while continuously weighing it. The moisture content is determined through the mass loss, when this reaches a stable value.

### Example 9 and 10

Recipes were prepared with the ingredients as indicated in the table below, according to the process described for example 1-3.

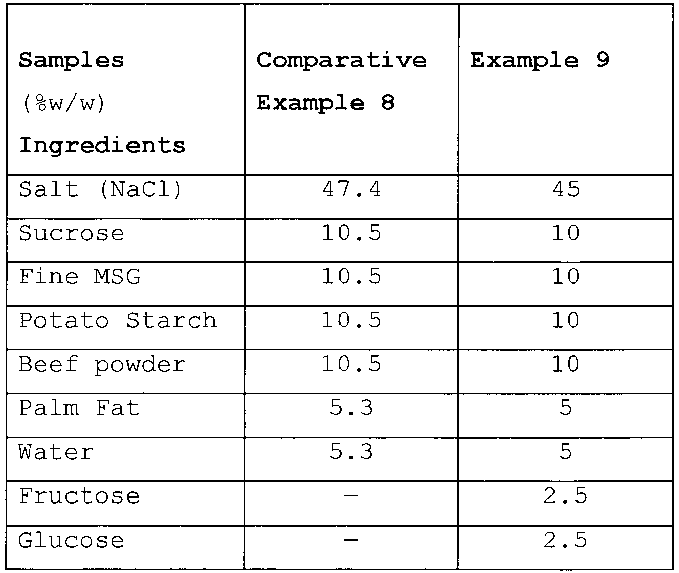

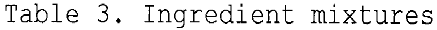

The resulting cubes were stored unwrapped, in a controlled relative humidity environment, and the hardness was measured over the course of four hours.

In an environment at a relative humidity of 53%, the cubes from example 9 increased in hardness by 6% (an amount that is not statistically different from zero), while the hardness of cubes made from the recipe of example 8 increased by 52% (which is statistically significant). At a relative humidity of 60%, the cubes from example 9 increased in hardness by 3% (an amount that is not statistically different from zero), while the hardness of cubes made from the recipe of example 8 increased by 57% (which is statistically significant).

After open storage, the cubes according to the invention maintained their soft texture and allowed to be crumbled with the same quality as just after opening of the packaging.

## Claims

1. A stock or seasoning cube comprising:
• from 2 wt% to 15 wt% of water,
• NaCl in amount to provide at least a saturated solution, based on the water content, wherein the NaCl is present in a ratio to water of at least 3:7, and in an amount of less than 90 wt% based on the weight of the stock or seasoning cube,
• Monosodium glutamate in an amount to provide at least a saturated solution, based on the water content, wherein the monosodium glutamate is present in a ratio to water of at least 5:5, and in an amount of less than 50 wt%, based on the weight of the stock or seasoning cube,
• Monosaccharide sugars in an amount of at least 25 wt%, based on the weight of the total water content,
wherein the stock or seasoning cube has a hardness of lower than 50 N; and wherein the total lipid content is lower than 15 wt%, based on the weight of the stock or seasoning cube.

2. Stock or seasoning cube according to claim 1, wherein the monosaccharide sugars are selected from the group consisting of glucose, fructose, galactose, tagatose, ribulose,
mannose, arabinose, and mixtures thereof.

3. Stock or seasoning cube according to anyone of the preceding claims, wherein the monosaccharide sugars are selected from the group consisting of glucose, fructose and mixtures thereof.

4. stock or seasoning cube according to anyone of the preceding claims, wherein the monosaccharide sugars is fructose.

5. Stock or seasoning cube according to anyone of the preceding claims, wherein the total lipid content is lower than 10 wt%, based on the weight of the stock or seasoning cube.

6. Stock or seasoning cube according to any of the preceding claims, wherein the water activity is lower than 0.6.

7. Process to produce the stock or seasoning cube according to any one of claims 1 to 6, comprising the steps of :
a) Preparing a mixture comprising:
• From 2 wt% to 12 wt% of added water,
• NaCl in amount to provide at least a saturated solution, based on the amount of added water, wherein the NaCl is present in a ratio to water of at least 3:7, and in an amount of less than 90 wt% based on the weight of the stock or seasoning cube,
• Monosodium glutamate in an amount to provide at least a saturated solution, based on the amount of added water, wherein the monosodium glutamate is present in a ratio to water of at least 5:5, and in an amount of less than 50 wt%, based on the weight of the stock or seasoning cube,
• Monosaccharide sugars in an amount of at least 40 wt%, based on the weight of the added water content.
b) Shaping the mixture resulting from step a),
to obtain a stock or seasoning cube.

8. Process according to claim 7, wherein step a) comprises the consecutive steps of :
i. preparing a mixture comprising at least part of the water and at least part of the monosaccharides,
ii. combining said mixture with the NaCl and monosodium glutamate.

9. Process according to claim 7 or 8, wherein the shaping step b) comprises roller formation, pressing or extrusion.

10. Process according to claim 7 or 8, wherein the shaping step b) comprises pressing.

11. Process according to any one of claims 7 to 10, wherein the shaping step comprises applying a pressure of between 0.5 and 10 bar.

12. Process to prepare a dish; comprising the step of dissolving at least part of the stock or seasoning cube according to anyone of claims 1 to 6 in an aqueous solution or combining it at least partly with a dish.

## Patentansprüche

1. Brüh- oder Würzwürfel,
der Folgendes aufweist:
• 2 bis 15 Gew.-% Wasser,
• NaCl in einer auf den Wassergehalt bezogenen Menge, so dass zumindest eine gesättigte Lösung bereitgestellt wird, wobei das NaCl in einem Verhältnis zum Wasser von mindestens 3:7 und in einer Menge von weniger als 90 Gew.-% vorliegt, und zwar auf das Gewicht des Brüh- oder Würzwürfels bezogen,
• Mononatriumglutamat in einer auf den Wassergehalt bezogenen Menge, so dass zumindest eine gesättigte Lösung bereitgestellt wird, wobei das Mononatriumglutamat in einem Verhältnis zum Wasser von mindestens 5:5 und in einer Menge von weniger als 50 Gew.-% vorliegt, und zwar auf das Gewicht des Brüh- oder Würzwürfels bezogen,
• Monosaccharidzucker in einer Menge von mindestens 25 Gew.-%, und zwar auf das Gewicht des gesamten Wassergehalts bezogen,
wobei der Brüh- oder Würzwürfel eine Härte von weniger als 50 N aufweist und wobei der gesamte Lipidgehalt weniger als 15 Gew.-% beträgt, und zwar auf das Gewicht des Brüh- oder Würzwürfels bezogen.

2. Brüh- oder Würzwürfel nach Anspruch 1,
wobei die Monosaccharidzucker aus der Gruppe ausgewählt sind, die aus Glucose, Fructose, Galactose, Tagatose, Ribulose, Mannose, Arabinose und Gemischen davon besteht.

3. Brüh- oder Würzwürfel nach einem der vorstehenden Ansprüche,
wobei die Monosaccharidzucker aus der Gruppe ausgewählt sind, die aus Glucose, Fructose und Gemische davon besteht.

4. Brüh- oder Würzwürfel nach einem der vorstehenden Ansprüche,
wobei die Monosaccharidzucker Fructose sind.

5. Brüh- oder Würzwürfel nach einem der vorstehenden Ansprüche,
wobei der gesamte Lipidgehalt weniger als 10 Gew.-% beträgt, und zwar auf das Gewicht des Brüh- oder Würzwürfels bezogen.

6. Brüh- oder Würzwürfel nach einem der vorstehenden Ansprüche,
wobei die Wasseraktivität weniger als 0,6 beträgt.

7. Verfahren zum Herstellen eines Brüh- oder Würzwürfels nach einem der Ansprüche 1 bis 6,
das die folgenden Schritte aufweist:
a) Herstellen eines Gemischs, das Folgendes aufweist:
• 2 bis 12 Gew. % zugesetztes Wasser,
• NaCl in einer auf die Menge des zugesetzten Wassers bezogene Menge, so dass zumindest eine gesättigte Lösung bereitgestellt wird, wobei das NaCl in einem Verhältnis zum Wasser von mindestens 3:7 und in einer Menge von weniger als 90 Gew. % vorliegt, und zwar auf das Gewicht des Brüh- oder Würzwürfels bezogen,
• Mononatriumglutamat in einer auf die Menge des zugesetzten Wassers bezogenen Menge, so dass zumindest eine gesättigte Lösung bereitgestellt wird, wobei das Mononatriumglutamat in einem Verhältnis zum Wasser von mindestens 5:5 und in einer Menge von weniger als 50 Gew. % vorliegt, und zwar auf das Gewicht des Brüh- oder Würzwürfels bezogen,
• Monosaccharidzucker in einer Menge von mindestens 40 Gew. %, und zwar auf das Gewicht des Gehalts an zugesetztem Wasser bezogen,
b) Formen des im Schritt a) entstandenen Gemischs, um einen Brüh- oder Würzwürfel zu erhalten.

8. Verfahren nach Anspruch 7,
wobei der Schritt a) die aufeinanderfolgenden Schritte aufweist:
i. Herstellen eines Gemischs, das zumindest einen Teil des Wassers und zumindest einen Teil der Monosaccharide aufweist,
ii. Kombinieren des Gemischs mit dem NaCl und dem Mononatriumglutamat.

9. Verfahren nach Anspruch 7 oder 8,
wobei der Formgebungsschritt b) das Formen mit Walzen, das Pressen oder Extrudieren aufweist.

10. Verfahren nach Anspruch 7 oder 8,
wobei der Formgebungsschritt b) das Pressen aufweist.

11. Verfahren nach einem der Ansprüche 7 bis 10,
wobei der Formgebungsschritt das Anwenden eines Drucks von 0,5 bis 10 bar aufweist.

12. Verfahren zum Herstellen eines Gerichtes,
das den Schritt des Auflösens von zumindest einem Teil des Brüh- oder Würzwürfels nach einem der Ansprüche 1 bis 6 in einer wässrigen Lösung oder dessen zumindest teilweises Kombinieren mit einem Gericht aufweist.

## Revendications

1. Cube de bouillon ou d'assaisonnement comprenant :
• de 2 % en masse à 15 % en masse d'eau,
• NaCl dans une quantité pour fournir au moins une solution saturée, rapportée à la teneur en eau, où le NaCl est présent dans un rapport à l'eau d'au moins 3:7, et dans une quantité inférieure à 90 % en masse rapportée à la masse du cube de bouillon ou d'assaisonnement,
• du glutamate de monosodium dans une quantité pour fournir au moins une solution saturée, rapportée à la teneur en eau, où le glutamate de monosodium est présent dans un rapport à l'eau d'au moins 5:5, et dans une quantité inférieure à 50 % en masse, rapportée à la masse du cube de bouillon ou d'assaisonnement,
• des sucres de monosaccharide dans une quantité d'au moins 25 % en masse, rapportée à la masse de la teneur totale en eau,
dans lequel le cube de bouillon ou d'assaisonnement présente une dureté inférieure à 50 N, et dans lequel la teneur totale en lipide est inférieure à 15 % en masse, rapportée à la masse du cube de bouillon ou d'assaisonnement.

2. Cube de bouillon ou d'assaisonnement selon la revendication 1, dans lequel les sucres de monosaccharide sont choisis dans le groupe constitué du glucose, du fructose, du galactose, du tagatose, du ribulose, du mannose, de l'arabinose, et de mélanges de ceux-ci.

3. Cube de bouillon ou d'assaisonnement selon l'une quelconque des revendications précédentes, dans lequel les sucres de monosaccharide sont choisis dans le groupe constitué du glucose, du fructose et de mélanges de ceux-ci.

4. Cube de bouillon ou d'assaisonnement selon l'une quelconque des revendications précédentes, dans lequel les sucres de monosaccharide sont du fructose.

5. Cube de bouillon ou d'assaisonnement selon l'une quelconque des revendications précédentes, dans lequel la teneur totale en lipide est inférieure à 10 % en masse, rapportée à la masse du cube de bouillon ou d'assaisonnement.

6. Cube de bouillon ou d'assaisonnement selon l'une quelconque des revendications précédentes, dans lequel l'activité d'eau est inférieure à 0,6.

7. Procédé de production du cube de bouillon ou d'assaisonnement selon l'une quelconque des revendications 1 à 6, comprenant les étapes de :
a) préparation d'un mélange comprenant :
• de 2 % en masse à 12 % en masse d'eau ajoutée,
• NaCl dans une quantité pour fournir au moins une solution saturée, rapportée à la quantité d'eau ajoutée, où le NaCl est présent dans un rapport à l'eau d'au moins 3:7, et dans une quantité inférieure à 90 % en masse rapportée à la masse du cube de bouillon ou d'assaisonnement,
• du glutamate de monosodium dans une quantité pour fournir au moins une solution saturée, rapportée à la quantité d'eau ajoutée, où le glutamate de monosodium est présent dans un rapport à l'eau d'au moins 5:5, et dans une quantité inférieure à 50 % en masse, rapportée à la masse du cube de bouillon ou d'assaisonnement,
• des sucres de monosaccharide dans une quantité d'au moins 40 % en masse, rapportée à la masse de la teneur en eau ajoutée
b) façonnage du mélange résultant de l'étape a), pour obtenir un cube de bouillon ou d'assaisonnement.

8. Procédé selon la revendication 7, dans lequel l'étape a) comprend les étapes consécutives de :
i. préparation d'un mélange comprenant au moins une partie de l'eau et au moins une partie des monosaccharides,
ii. combinaison dudit mélange avec le NaCl et du glutamate de monosodium.

9. Procédé selon la revendication 7 ou 8, dans lequel l'étape de façonnage b) comprend une formation, une compression ou une extrusion de rouleau.

10. Procédé selon la revendication 7 ou 8, dans lequel l'étape de façonnage b) comprend une compression.

11. Procédé selon l'une quelconque des revendications 7 à 10, dans lequel l'étape de façonnage comprend l'application d'une pression de 0,5 à 10 bar.

12. Procédé de préparation d'un plat, comprenant l'étape de dissolution d'au moins une partie du cube de bouillon ou d'assaisonnement selon l'une quelconque des revendications 1 à 6 dans une solution aqueuse ou de combinaison de celle-ci au moins partiellement avec un plat.
